# EUROPEAN PATENT SPECIFICATION

(11) **EP 2 456 152 B1**
(45) Date of publication and mention of the grant of the patent: **11.01.2017**
(21) Application number: 11188022.5
(22) Date of filing: 07.11.2011
(51) Int. Cl.: H04L 25/02

(54) **Integrated circuit for emulating a resistor**
Integrierte Schaltung zur Emulierung eines Widerstands
Circuit intégré pour émulation d'une résistance

(30) Priority: 17.11.2010 EP 10191578
(43) Date of publication of application: 23.05.2012
(73) Proprietor: NXP B.V., 5656 AG Eindhoven (NL)
(72) Inventor: Den Besten, Gerrit, 5656 AG Eindhoven (NL)
(74) Representative: Schouten, Marcus Maria

(56) References cited:
- US-A- 4 574 249
- US-A1- 2004 100 309
- US-A1- 2010 123 521

## Description

This invention relates to an integrated circuit for emulating a resistor.

Certain applications require use of resistors with good absolute resistance accuracy. Resistor types available in semiconductor processes that are used to manufacture integrated circuits have limited absolute accuracy due to variations in the processing. The resistance values in typical semiconductor processes are generally considered as a parasitic effect which happens to be useful for analog design, and is usually not a primary optimization aspect in the process.

Therefore the variation in resistance of resistors with a given geometry can be substantial and easily contributes +/- 10-30% uncertainty to the absolute value.

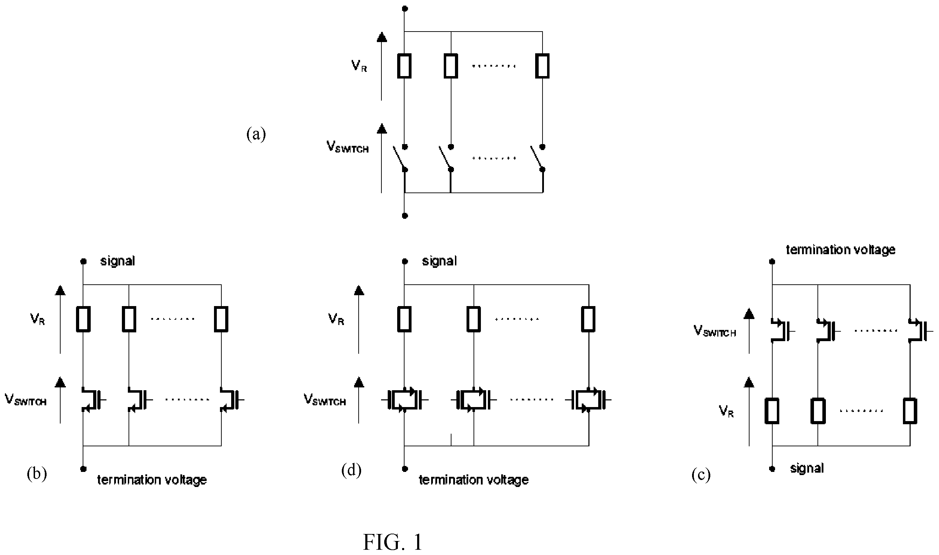

When accuracy of the absolute value of a resistor is important, for example as in the case of terminations of characteristic lines, it is desirable to have a tuning capability to adapt the resistance to the desired value. A known way of resistance tuning is to use a set of parallel resistor branches with scaling values and a switch in series with each of the resistors, which can selectively be enabled and disabled, as shown in Figure 1.

Figure 1(a) shows this approach conceptually, with a number of parallel branches, each having a switch and resistor in series.

Although for the desired tuning range, often one of the resistors does not need to be switched off, it is usually still desirable that all have a switch in series in order to be able to set the resistor to high impedance.

In MOS processes the switches are typically implemented as MOS transistors which are driven by rail-to-rail logic selection signals. In order to achieve good linearity, the voltage across the switch should be low and therefore the resistance should be low, which necessitates large transistors, implying parasitic capacitance, which limits the bandwidth. For high-speed transmission applications, the achievable bandwidth is a very important parameter to achieve good return loss up to very high frequencies.

Depending on the signal levels at the resistor with respect to the supplies, the switches can be implemented as PMOS transistors (as shown in Figure 1(b)), NMOS transistors (as shown in Figure 1(c)), or complementary pass-gates (as shown in Figure 1(d)).

It is often preferable to keep the termination voltage close to a supply - vdd or vss - as in that case only one transistor is needed per switch, and MOS switches have the lowest on-resistance per unit width.

The parasitic capacitive loading due to these switches can be substantial and can become bandwidth limiting. Furthermore, for non-selected branches the switch is high impedance and therefore the switch capacitance needs to be charged via the branch resistor, which results in further bandwidth limitations.

Finally, there are sometimes short-current-condition requirements which necessitate over-dimensioning of device sizes and metal routing, resulting in more parasitic effects, like extra capacitance.

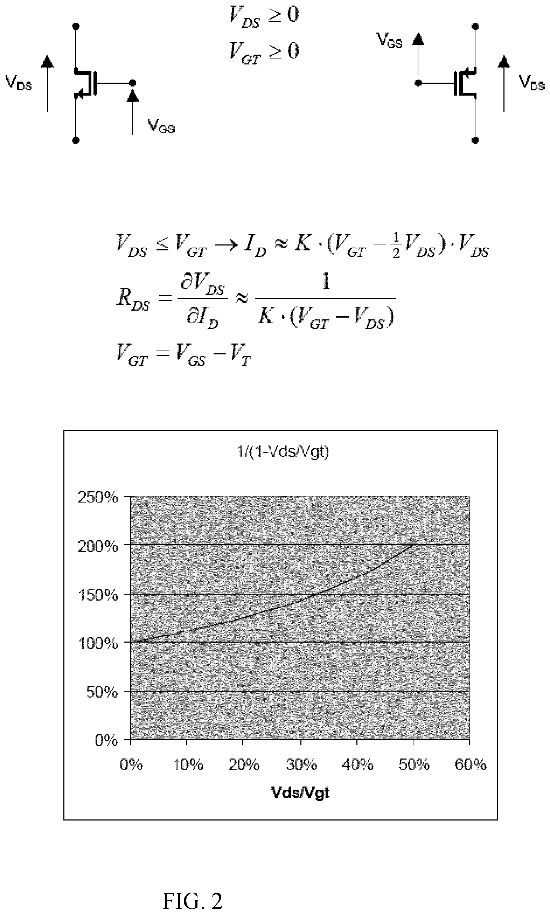

In order to reduce the parasitic capacitance of the switching device, its size needs to be reduced which causes a larger fraction of the voltage across the MOS transistor. However the on-resistance of a MOS transistor with fixed gate-source voltage Vgs varies with the voltage across drain-source Vds, causing a non-linear current-voltage characteristic. This is illustrated and calculated in Figure 2, for an idealized square-law MOS characteristic.

The value V_{GT} is the gate overdrive bias. The transistor is operated in the linear operating region with the drain source voltage less than the gate overdrive bias. The plot shows that for a given gate overdrive voltage, the resistance R_{DS} varies with V_{DS} in the non linear manner shown.

The invention aims to provide a resistor which maintains a constant value over a large voltage range. Thus, the current-voltage relationship is linear over a large range. For data communications, this linearity is important for accurately matching characteristic impedance over the complete signal voltage range. The invention thus aims to provide a tuned resistor with low parasitic capacitance and improved linearity.

United States Patent number 4,5474,249 discloses a current source realised by a specially designed FET Q_{F} having a drain and source connected to the input and output terminals of an amplifier. A bias voltage source is connected between the source and gate of Q_{F}. This circuit is a form of transimpedance amplifier in which the feedback resistor is an FET Q_{F} operating in the linear portion of its drain-voltage vs. drain current characteristic.

According to the invention, there is provided an integrated circuit for emulating a resistor as defined in claim 1.

The invention is based on the concept that the resistance of a non-linear circuit element can be linearized by super-positioning a fraction of an output voltage to the control terminal.

The circuit element comprises a main transistor having a source and drain as the input and output terminals and a gate as the control terminal, wherein the circuit further comprises a high-impedance DC gate bias circuit for biasing the main transistor into operation in its linear region. The gate bias circuit can be used for tuning the resistance.

The output voltage (source voltage, drain voltage, source-drain voltage or other output voltage) is thus coupled to the gate. This measure makes the output resistance (source-drain resistance) less dependent on the source-drain voltage, and thereby makes the current-voltage characteristic more linear. The transistor characteristics allow that the resistance can be tuned accurately by controlling the bias conditions.

Because the transistor is normally operated in its linear region, it provides implicit current limiting capabilities for over-voltage and short conditions due to the transistor being in saturation.

The coupling circuit (a) can comprise a feedforward capacitor connected between the gate and drain of the main FET transistor. The gate bias circuit can then comprise:
a bias transistor which is a scaled version of the main transistor;
a current source for driving a known current through the bias transistor;
a feedback loop that controls the gate voltage of the bias transistor, wherein the gate voltage of the bias transistor is used as the output of the gate bias circuit, which is applied to the main transistor gate through a bias resistor.

This provides a gate bias circuit which is a replica (and can be a scaled replica) of the main part of the resistor emulator circuit. In this way, a feedback mechanism is used to obtain the required gate signal to derive a desired output voltage of the resistor emulator circuit is obtained (such as a common mode voltage).

As an alternative to (a) the circuit can comprise a series resistor in series with the drain of the main transistor, wherein the coupling circuit is for adding a voltage comprising a scaled fraction of one or more of:
the ac source voltage of the main transistor;
the ac drain voltage of the main transistor;
the ac source-drain voltage of the main transistor,
the ac voltage across the series resistor.

In one example, the sum of ac voltage across the resistor and the transistor drain-source voltages are added to form the voltage to be coupled.

This series resistor enables a feed-forward capacitor to be reduced in size. The feed-forward capacitor is for example connected between the node of the series resistor remote from the drain and the gate of the main transistor, and the coupling circuit is for coupling a scaled fraction of the ac signal at said side of the series resistor remote from the drain. The gate bias circuit can then comprise:
a bias transistor which is a scaled version of the main transistor;
a series bias resistor in series with the drain of the bias transistor;
a current source for driving a known current through the bias transistor;
a feedback loop that controls the gate voltage of the bias transistor, wherein the gate voltage of the bias transistor is used as the output of the gate bias circuit, which is applied to the main transistor gate through a bias resistor.

There may be multiple main transistors associated with different series resistances, wherein a switching arrangement is provided to enable a second main transistor to be switched in or out of circuit, thereby providing control of the impedance of the circuit.

The main transistor and the bias transistor can each comprise a FET.

The invention also provides a switched current line driver circuit, comprising:
a first resistor emulator circuit of the invention between a supply voltage and a first output terminal of the line driver circuit; and
a second resistor emulator circuit of the invention between the supply voltage and a second output terminal of the line driver circuit.

A current source can be provided for sinking or sourcing current from or to the resistor emulator circuits;
a first control switch is then between the first resistor emulator circuit and the current source with a first output node between the first resistor emulator circuit and the first control switch; and
a second control switch is then between the second resistor emulator circuit and the current source, with a second output node between the second resistor emulator circuit and the second control switch,
wherein a signal to be transmitted by the line driver is applied to the control transistors.

This arrangement defines a line driver circuit with resistors that can be accurately tuned for required impedance matching.

The invention also provides a method of emulating a resistor, according to claim 9.

Examples of the invention will now be described in detail with reference to the accompanying drawings, in which:
Figure 1 shows a prior-art digital tuneable resistor;
Figure 2 shows a MOSFET in linear operation region;
Figure 3a shows how to improve linearity of the MOSFET on-resistance in the linear operation region in accordance with the invention;
Figure 3b shows the behaviour of the MOSFET on-resistance with improved linearity for V_{DS}<0;
Figure 4 is a summary of the behaviour of the MOSFET on-resistance with improved linearity for all V_{DS} levels;
Figure 5 is a visual representation of the linearized MOS resistor operation of the invention;
Figure 6 show a conceptual example of signals in the tuneable and linearized resistor topology of the invention;
Figure 7 shows the common mode bias generation if a common-mode current flows through terminations;
Figure 8 shows the common mode bias generation if a common-mode current flows through terminations with scalable output signal drive strength;
Figure 9 shows a replica termination structure with tuneable size;
Figure 10 shows the common mode bias generation without a common-mode current through the terminations;
Figure 11 an NMOS implementation of bias generation circuit;
Figure 12 shows how to extend the impedance tuning range by selectable extra parallel branches, Figure 12 (a) shows fully parallel branches and Figure 12(b) shows segmented resistors with separate transistors connected to taps.

The invention provides an integrated circuit for emulating a resistor based on the drain-source resistance of a transistor. The transistor is biased into operation in its linear region, and a voltage dependent on the ac source-drain voltage is added to the gate voltage, thereby to improve linearity of the drain-source resistance with respect to the drain-source voltage. This modification to the gate voltage can be used to alter the transfer function such that the dependency of the drain-source resistance on the drain-source voltage is first-order substantially eliminated.

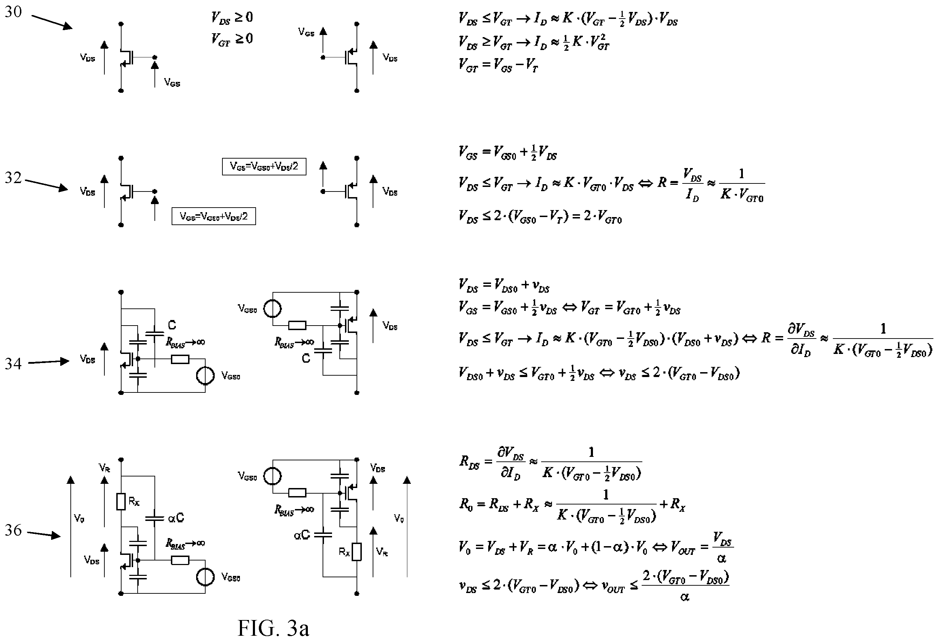

Figure 3a shows step-by-step how the resistance of the MOS transistor can be linearized by super-positioning a fraction of its drain signal voltage to its gate. The equations relate to an idealized square-law MOS characteristic.

Figure 3a shows analyses for both NMOS and PMOS configurations. For a V_{GS} which equals V_{GS0}+_{VDs}/2, the on-resistance of the MOS transistor becomes almost constant.

The top images 30 show the basic transistor characteristics as in Figure 2.

The images 32 show the influence of adding a component to an initial gate-source voltage VG_{S0} which component is a half of the drain source voltage V_{DS}.

The images 34 show a how a circuit based on capacitive coupling can couple half the change in drain source voltage onto the gate. A capacitor C is provided between the gate and drain. This capacitor forms a capacitive coupling circuit with the parasitic capacitances between the gate and drain and between the gate and source. The gate is biased to a low frequency (e.g. dc) reference level by a gate bias voltage V_{GS0} which forms part of a high impedance bias circuit. A large bias resistor R_{BIAS} couples the reference voltage level to the gate.

The gate has high-ohmic bias, so there is a cut-off frequency of Rbias together with all capacitance on the gate node, which is set to a low frequency, This means the signal spectrum is sufficiently higher that for the signal spectrum the gate signal is only capacitively determined.

The signal spectrum is usually DC-balanced (i.e. no DC) by line encoding and/or modulation techniques, meaning that there is no significant signal content below a certain corner frequency. For the ac signals therefore, the capacitive ratios determine the coupling fraction. The most significant capacitors in the coupling scheme are Cgs and Cdg of the transistor and the coupling capacitor C. Cdg actually helps substantially, especially when a substantial part of the resistance is made with an explicit series resistor in the drain. For an ideal square-law MOSFET in the linear region and Vds=0, Cgs=Cdg, which means that the coupling factor of ½ is already there. However, for real MOSFETs and non-zero Vds the intrinsic coupling is lower, and therefore some additional signal needs to be coupled to the gate. This is achieved with the extra coupling capacitor C.

By simulations with realistic transistor models, it can be easily determined what the most optimal C value is to optimally compensate the drain-source voltage dependency, and obtain the best linearity of the resistor.

With the high-impedance low-frequency gate bias, the drain signal can be fractionally coupled to the gate by the capacitor between drain and gate which forms a capacitive division with the capacitances seen at the gate node with respect to other nodes. Some of the desired feed-forward capacitance between drain and gate is naturally present in practical MOS transistors due to the effective drain-gate oxide capacitance in the triode operation region and the gate-drain overlap capacitance.

As shown in the equation, the ac resistance becomes dependent only on the constants V_{GT0} (the reference over-threshold drive) and V_{DS0} (the reference/dc drain source voltage).

The bottom images 36 show that the capacitor C which provides the desired coupling of 1/2v_{DS} can replaced by a smaller capacitor αC, by introducing a resistor Rx between the drain and the capacitor terminal.

By adding this resistor in series with the drain of the MOS transistor, the capacitive coupling with the gate can be achieved with a smaller capacitance αC, because the signal voltage Vo is larger by a factor 1+Rx/Ron=1/α, compared to the drain-source voltage V_{DS} of the MOSFET. Vo becomes a linearly scaled version of V_{DS} if Ron is constant, which is fulfilled if the correct fraction of the signal is coupled to the gate. The added series resistor can be of any type. Inaccuracies in the value of the resistance Rx can be compensated by the tuning of the emulated resistor, so that the total resistance is at the desired value.

In the arrangement 36, with the capacitor connected to the other side of the series resistor Rx, the optimum factor F is the ratio between Rds and Rx. Because Rx has spread, this ratio is not perfectly constant. By way of example, Rx can contribute about 60% and Rds contributes about 40% of the total resistance (of 50 Ohm). The misfit of F due to spread is acceptable in that case. Note that even with a series resistor the capacitive coupling can also be implemented from the point between the series resistor Rx and transistor. The capacitor needs to be somewhat larger, but the capacitive ratio becomes better determined in that case.

Because the linearity of the resistance fraction contributed by the MOS transistor has become much better this way, a larger fraction of the voltage can be put across the drain-source of the transistor, so that the transistor can be scaled down in size. Furthermore it can be seen from the formulas shown in Figure 3a that the value of the on-resistance can be tuned with the biasing levels V_{GS0} and V_{DS0}. These two aspects together allow to adapt the effective resistance of the structure without adding extra parallel branches, but only by tuning the biasing voltages V_{GS0} and V_{DS0}.

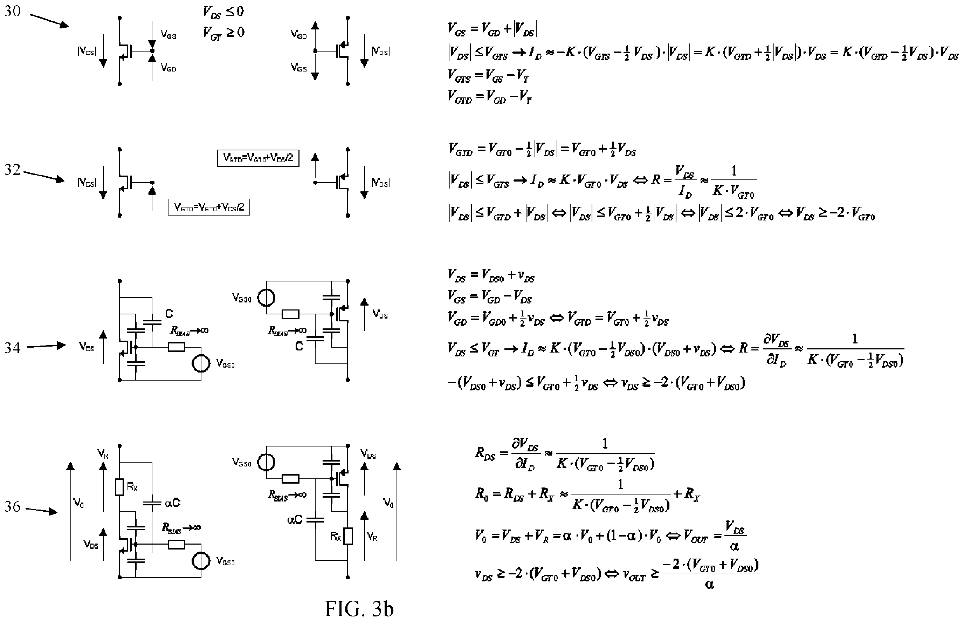

In Figure 3b it is shown that the same principle also holds for negative V_{DS} voltages, so the signals at Vo can be both higher and lower than the termination voltage. The circuits are the same as in Figure 3 a.

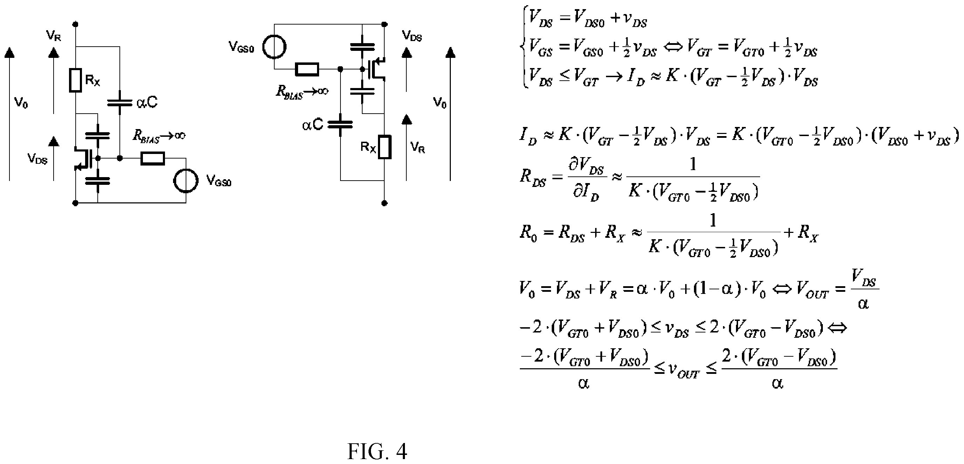

Figure 4 merges the results obtained in Figure 3a and 3b to provide idealized expressions that hold for both positive and negative drain-source voltages. The structures shown will be referred to as the tuneable resistor topology or tuneable linearized resistor topology of the invention.

In Figures 3 and 4, the gate node of the MOS transistor is biased with a resistor R_{BIAS} which is on the other side connected to the reference (dc) gate voltage V_{GS0}. This bias resistor provides the correct DC level to the gate, but shall be sufficiently high-impedance in the frequency spectrum of this signal in order to ensure good partial signal coupling to this gate node. This bias resistor together with the total capacitance seen at the gate node, causes a high-pass characteristic in the partial signal coupling.

In these concept schemes, the value of R_{BIAS} is therefore indicated to preferably go to 'infinity'. The latter is not really required, as it is not a limiting factor as long as the corner-frequency of this high-pass filter is kept sufficiently low.

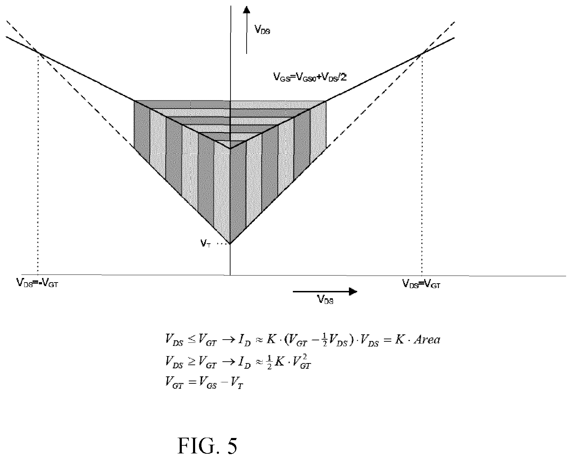

The mechanism behind the constant on-resistance with the drain signal partly coupled to the gate, is illustrated in Figure 5.

The gate-source voltage V_{GS} is on the vertical axis, the drain-source voltage V_{DS} is on the horizontal axis, and the size of the grey areas is a measure of the current. For each unit step of increase of Vds the same area is added. This is a graphical representation of the formula Id=K(V_{GS}-V_{DS}/2)*Vds. Note that without partial coupling to the gate the on-resistance would become larger and larger for increasing absolute value of V_{DS} as the current is pinched at V_{DS}=V_{GS}-V_{T}, i.e. V_{DS}=V_{GT}, for an idealized MOS characteristic.

Note that the idealized MOS transistor characteristic is only used to explain the principles and is not a requirement for this invention.

Practical MOSFET characteristics are not really quadratic; only by first approximation over a limited range. However the amount of signal coupled to the gate can be optimized by simulations for real transistors characteristics. This will significantly improve the linearity of the resistance compared to the structure without having the drain signal partially coupled to the gate.

Some practical non-idealities of MOS transistors actually help to improve performance. For example, the limited output impedance in saturated operation means that there is not a hard cross-over point where the impedance suddenly becomes very large. Other effects like back-bias modulation can easily be accounted for by optimizing the component dimensions in a real circuit design.

The resistor structure according to this invention has the extra advantage that the resistance does not remain constant for any voltage. For large V_{DS}, when the MOS transistor becomes saturated, it behaves by first approximation as a current source, thereby limiting the maximum current. This provides an implicit current limiting feature. This can be utilized as short circuit protection, for example, thereby also taking away the need to over-dimension the components and routing for currents far beyond the normal operating conditions.

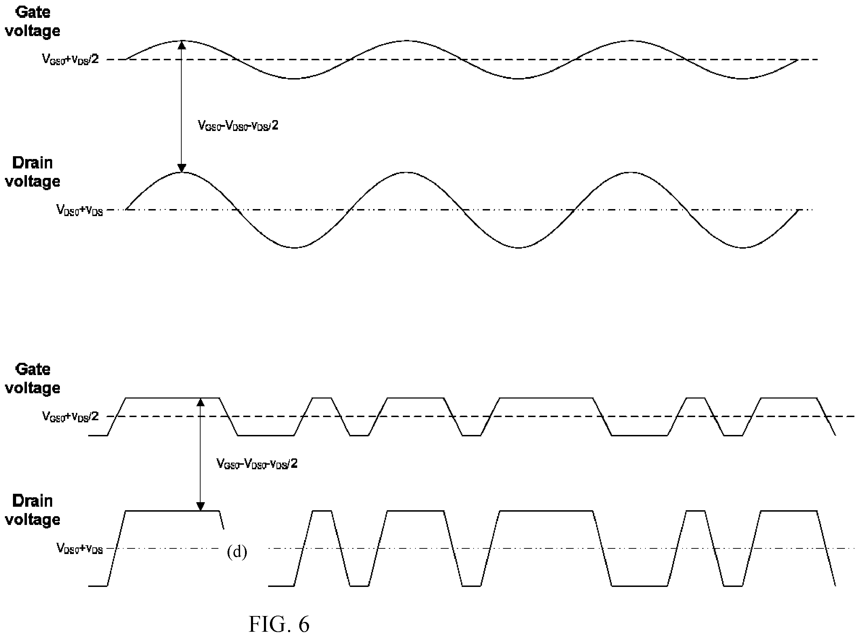

Figure 6 shows an example of signals at the drain and gate of the MOS transistor in the tuneable resistor topology for both sinusoidal and bit stream signals.

As shown, the gate voltage (which is the gate-source voltage) comprises the reference level V_{GS0} modulated by the high frequency fluctuation v_{DS}/2, and the drain voltage (which is the drain-source voltage) comprises the reference level V_{DS0} modulated by the high frequency fluctuation v_{DS}.

It will now be described how the tuneable resistor topology of the invention can be applied in circuits and how appropriate biasing can be generated to achieve the desired resistance.

One example of use of the circuit of the invention is in line driver circuits. for driving serial signals down transmission lines, to enable communication between different pieces of electronic equipment. In a current sinking switched current driver, a current source sinks current through the loads from the termination voltage. A switching arrangement,driven by an input serial data stream, controls the distribution of current between the loads In a current sourcing switched-current driver, a current source sources current through the loads to the termination voltage. A switching arrangement between the current source and loads, driven by an input serial stream, controls the distribution of currents between the loads.

Although in the case of line terminations, the tuneable resistor topology can be connected to any termination voltage, there is an obvious benefit to use the PMOS-based version for higher termination voltages (typically a current sinking arrangement) and the NMOS-based version for lower termination voltages (typically a current sourcing arrangement) with respect to the supply. It is also often attractive to terminate to a voltage equal or close to a supply rail, to maximize tuning range and minimize parasitic effects. For the PMOS-based version this would typically be vdd and for the NMOS-based version that typically would be vss.

In the examples below, the topology is shown as connected to a supply, in most cases that is the PMOS-based version with respect to vdd and in a few cases the NMOS-based version with respect to vss. This is for comprehensibility of the examples. However, this does not limit the scope of this invention, as these examples can also be reworked to terminate to any other termination voltage.

Furthermore, in any example using the PMOS-based tuneable resistor topology version, a similar example could be given with a complementary circuit using the NMOS-based version.

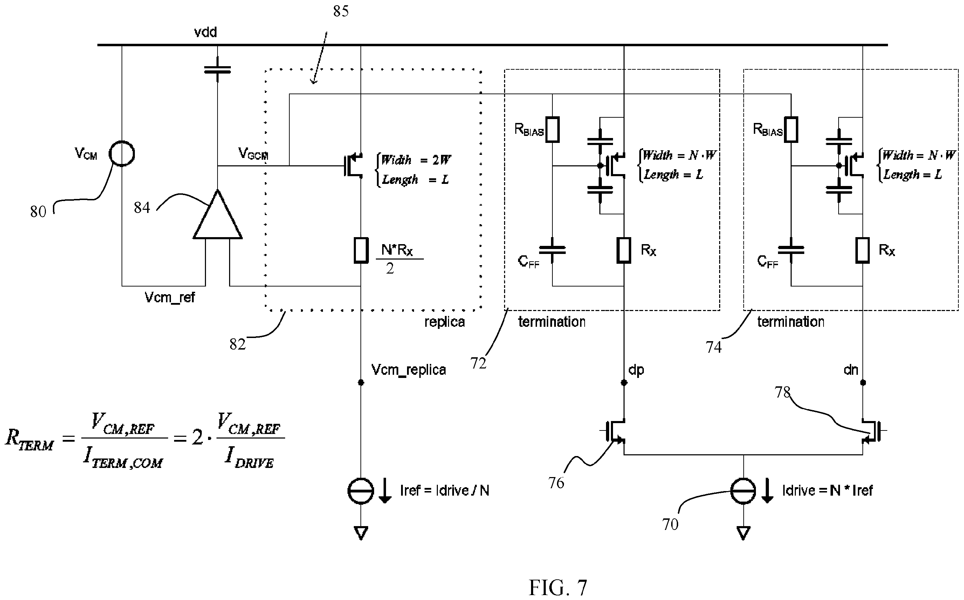

Figure 7 shows a method to bias the gate voltage of the tuneable resistor topology to obtain a desired resistance for the case when there is common-mode DC current flowing through the resistors.

The circuit is a current sinking switched line driver. The current source 70 sinks a drive current Idrive through one or other of the resistor circuits 72,74 in dependence on the signals applied to the gates of a pair of input transistors 76,78. The resistor circuits function as termination circuits. The output load (in this example including the shown near-end termination, but not shown are the transmission lines and far-end termination load) is connected between the output nodes dp and dn so that current is drawn through the load. For example with transistor 76 turned on, a current will be drawn through resistor circuit 74, along the transmission line between dn and dp and through transistor 76

The far-end termination resistance typically equals to the near-end termination resistance, so the AC current will roughly split 50/50. In many systems the transmission path includes AC coupling, (DC blocking), so that all DC current flows through the near-end termination. Without AC coupling the DC current distribution depends also on the far-end termination voltage.

A common mode voltage source 80 generates a common mode voltage which. Circuit 82 functions as a replica structure of the tuneable resistor terminations, and a current is drawn from the circuit 82 by a reference current source. This reference current is mirrored in the two resistor circuits 72,74, with scaling so that the current source 70 draws a current N times the reference current. This is achieved with suitable scaling of the transistor dimensions. The termination resistor circuits require accurate absolute value of resistance for impedance matching purposes.

Thus, a scaled version of the common-mode currents through the resistor circuits 72,74 is enforced through a replica of the tuned-resistor topology, which is similarly scaled in size too, such that the impedance of the replica structure (i.e. between Vdd and the bottom of resistor NRx/2) is a scaled version of the resistor circuit impedance. This scaling factor is N in figure 7.

A feedback loop, including an amplifier 84 which generates the gate bias V_{GCM} for the replica structure 82, enforces that the voltage across the replica structure is equal to the provided reference voltage Vcm. The gate bias is the analogue control voltage 85 which sets the operating point of the emulated resistor circuit and thereby determines the emulated resistance. This means that the effective resistance of the replica structure becomes R_replica=Vcm/Iref, and the resistance of the terminations Rt=Vcm/Idrive=(2*Vcm)/(N*Iref).

If the ratio Vcm/Iref can be made accurate, the termination impedance becomes accurate too. Note that Vcm/Iref has the nature of a resistance and can for example be derived from another, not-bandwidth limited , integrated digitally calibrated resistor Rref, which can be implemented according to Figure 1. For example, the current Iref can be generated by enforcing a bandgap voltage across the Rref, and the voltage Vcm can be generated as a scaled copy of a bandgap voltage.

Note that this biasing structure allows to accurately control the output voltage level, due to the replica biasing, which enforces Vcm across the replica, which corresponds with a common-mode level of approximately Vcm across the terminations. This method of control enables much better voltage accuracy than the summed inaccuracies of an independently generated current Iref and some reference impedance Rref. This provides the advantage that the signal voltage window is better constrained which allows for better optimized designs. Theoretically this has the impact that the resulting impedance will become slightly less accurate. However, the tuneable resistor topology of the invention provides sufficient accuracy, because Iref and Vcm can be correlated, so that this aspect will not be a limiting factor in practice.

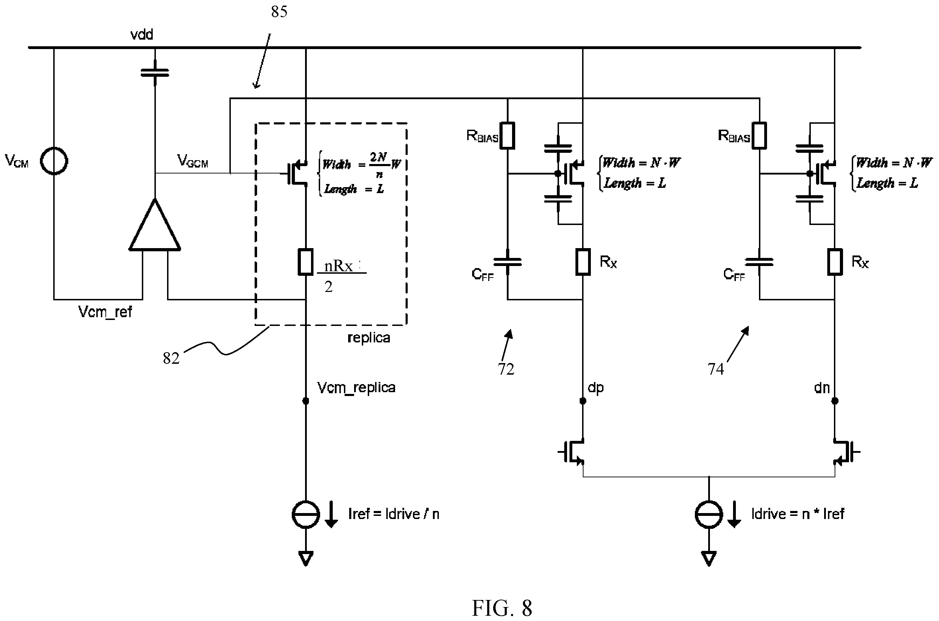

In case the ratio between Iref and Idrive, denoted as N, is varied in order to adapt output driver drive strength, the size of the replica structure needs to be adapted too, to ensure correct operation. This is shown in Figure 8, where a variable factor n is used to indicate the scaling of the current through the terminations due to scaling of current drive strength.

Figure 8 corresponds to Figure 7, and the only difference is that instead of scaling the reference current for the replica, the impedance of the replica is scaled. This is achieved by scaling the transistor width (1/n) and the value of the series resistor (n). This represents schematically the ability to scale the impedance of replica circuit 82.

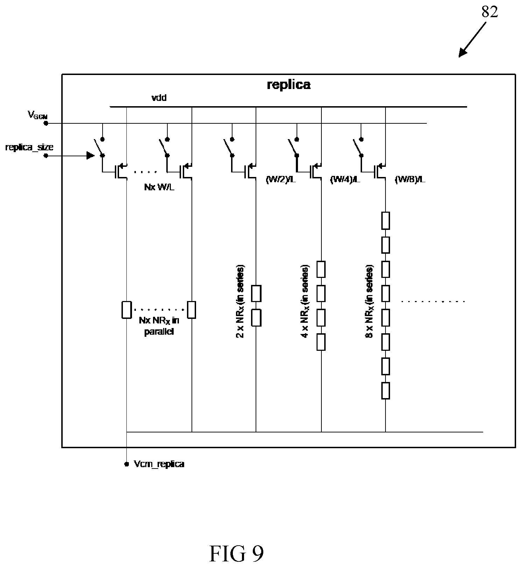

Figure 9 shows a possible embodiment of the replica circuit 82 to allow replica-size scaling as shown schematically in Figure 8. In this particular embodiment of the replica circuit 82, part of the tuning is done in a linear fashion, by N parallel unity segments, and part of the tuning is done in a binary manner, by binary-scaled segments.

The circuit comprises a series of parallel branches, each with a transistor and resistor. The first N branches have the same dimension transistor (W/L) and the same resistor value NRx. The remaining branches have a binary decreasing W/L ratio (W/2L, W/4L etc.) and a binary increasing resistor value (2NRx, 4NRx etc.). Each transistor is controlled independently so that the different branches can be switched in or out of circuit. A control word "replica_size" provides control of all of the branches.

The number N allows easy scaling for several drive strengths if the termination is also implemented as N equivalent parallel segments. The binary fractional part in the replica circuit 82 allows for fine-tuning and to cover all drive strengths with sufficient accuracy.

If there is no DC current flowing through the terminations, the previously described biasing method doesn't work anymore, because that would imply zero common mode voltage Vcm, which would make the impedance control feedback loop fail. This situation is for example applicable for receiver input terminations of an AC- coupled link, where series-connected decoupling capacitors are present between transmitter and receiver to block DC signals. An additional known current can be sourced through the terminations, which allows the same biasing as described before to be applied. However, that will typically be at the cost of substantial power consumption because the impedance level is usually low, often 50 Ohms, and the voltage shift needs to be large enough to ensure accuracy and correct operation of the feedback loop.

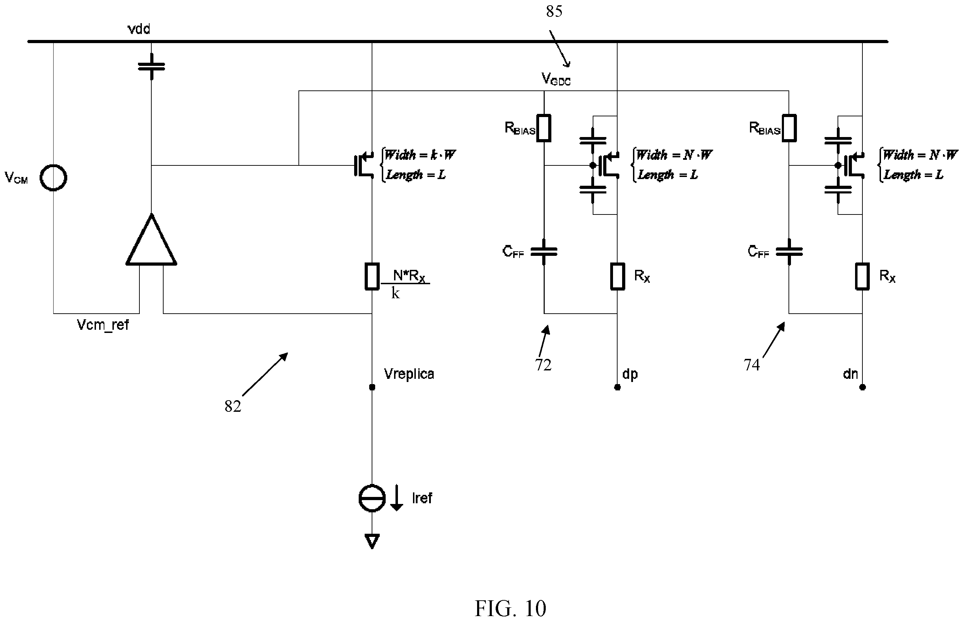

An alternate way to control the impedance is described with reference to Figure 10.

Figure 10 corresponds to Figure 7, but with the current source 70 and control switches 76,78 omitted. The replica circuit is shown as having a transistor with a width to length ratio of kW/L compared to the resistor circuit transistors with width to length ratio of NW/L.

Figures 7 and 8 show a driver side configuration, where the devices 70, 76, 78 represent the current-switched driver. Figure 10 shows a receiver side configuration, so the driver related components are not shown. The receiver side may often have no DC current through the termination.

For a selected replica size, the impedance as seen at dp and dn decreases when Vcm is decreased (in Figure 10 vdd=vterm, so decreasing Vcm increases the voltage at node vcm_ref) and the impedance increases for increasing Vcm (in the Figure 10, increasing Vcm decreases the voltage at node vcm_ref). Furthermore, for a fixed Vcm reference voltage, the impedance as seen at dp and dn decreases for decreasing size of the replica, and the impedance increases for increasing size of the replica. Note that by increasing the "size" of the replica is meant increasing the size of the impedance of the replica.

This means that by independent control of Vcm and the replica size, the resistance of the structure can be varied. This allows to determine a relation between Vcm and k for which the impedance at dp and dn has the desired value.

Because the common-mode drain-source voltage of the termination circuits themselves is zero, it is preferable to select a reasonably low Vcm, to get the best accuracy. Note that for this case, Vcm intentionally does not correspond with the actual common-mode voltage of nodes dp and dn.

The replica can be made such that its effective size is controllable, for example as shown in Figure 9 with digital logic control signals. Similarly, an adaptable value of Vcm can for example be implemented with a resistive ladder with a fixed reference voltage across, and the common mode voltage Vcm is taken from a selected ladder tap.

For any of the shown differential termination schemes, in combination with differential signals, the currents through the R_{BIAS} resistors cancel each other and do not impact the feedback control loop.

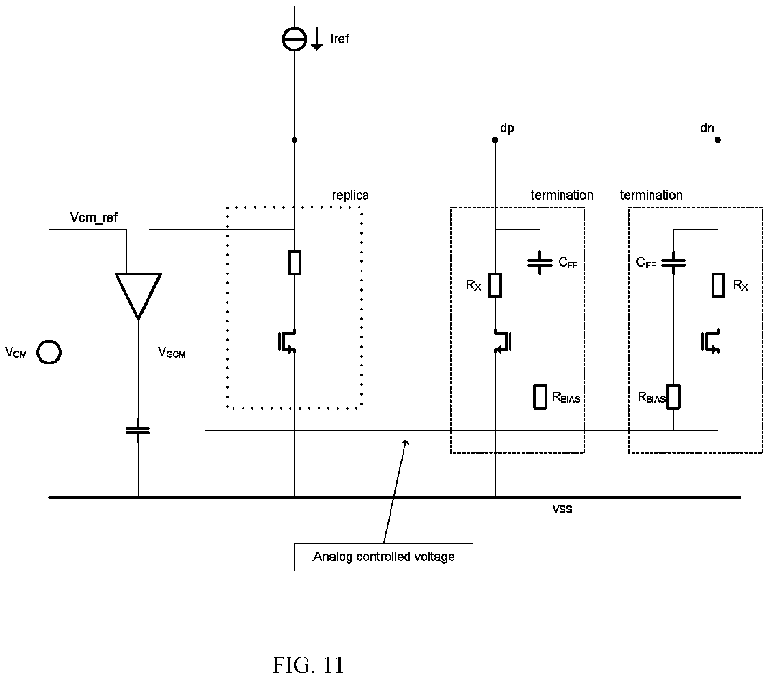

Figure 11 shows a complementary structure using NMOS transistors, including two terminations using the tuneable resistor topology and a replica bias structure. The circuit functions according to the same principles as the circuits of Figure 7,8, and 10, and is simply provided to show an NMOS implementation, suitable for a current sinking switched current source line driver or a receiver-side termination to vss.

The achievable impedance tuning range of the tuneable resistor topology as shown in Figure 4 is influenced by the choice of Rx and furthermore constrained by the triode voltage region limits of the MOS transistor. Note that the linearized signal voltage range is extended by increasing Rx as fraction of the total resistance, while simultaneously the achievable impedance tuning range reduces, and vice versa. Balancing these two aspects will preferably allows:
a) a substantial impedance tuning range to cover the spread of the resistance of Rx and tune accurately to the desirable fixed total impedance, for example 50 Ohms
b) a sufficiently large linearized voltage window for the signals in the application, for example low voltage signals in high-speed serial interfaces.

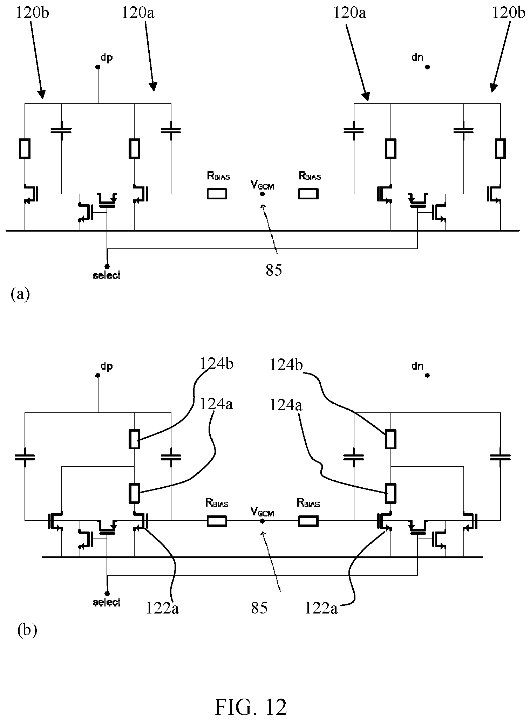

Furthermore there may be a desire to be able to tune for multiple different known fixed impedances. If all requirements cannot be fulfilled by the tuning range that the basic topology can provide, the structure can be extended with selectable extra branches as shown in Figure 12.

Figure 12a shows a circuit where multiple similar, possibly scaled, branches are put in parallel within each emulated resistor circuit.

The first branch 120a covers the highest impedance range, the second 120b one a lowered range as the total resistance of the parallel branches is decreased. As long as both ranges are overlapping the total tuneable range is extended. Note that the extension can be continued with a third branch, and so on.

A select control line determines if the emulated resistor circuits comprise a single branch 120a and thus correspond to the examples above, or if the two branches (in this example) are connected together in parallel. Alternately, (not shown) the two branches may be implemented as independently selectable such that either one branch, the second branch, or both in parallel can be selected. This approach can also be extended to more than 2 branches.

Figure 12b shows an alternate method to increase the tuning range by splitting the extra series resistor Rx into multiple fractions, and multiple transistors connected with their drain to these resistor taps.

One transistor 122a connects to both resistors 124a,124b in series, and the circuit then functions in the same way as the earlier circuits (with the sum of the two resistors 124,124b equal to Rx). When the select signal is high, a second branch is activated which includes only resistor 124b. This effectively bypasses resistor 124a and thereby disables the first path.

All enabled transistors are coupled to the gate control node V_{GCM,} while for disabled transistors their V_{GS} is made low by the select line. By selecting which transistor(s) are enabled the fraction of Rx in the total resistance can be varied.

Due to fact that there is a MOS transistor between the signal and the termination voltage, the structure can be made high impedance by making the V_{GS} of the MOS transistor low, that way utilizing the same MOS transistor as a switch that can be turned-off.

The description above refers to differential structures, but application to single-ended signals is also possible, assuming that the signal across the resistor is DC balanced and the cross-over frequency of the high-pass filtering at the control gate node (due to high impedance bias) is sufficiently low compared to the signal spectrum.

In the description above, the tuneable resistor topology utilizes a MOS transistor as tuning device. The benefits of the partial signal coupling to the gate are caused by the non-linear device characteristics of the MOS transistor between control voltage Vgs, drain-source voltage Vds, drain current Id, and their correlation. However any other type of transistor device can be used instead as long as it has a control gate to influence the (linear or non-linear) output I-V characteristics. The coupling factor, and/or coupling filter, and/or coupling function can then be optimized to eliminate or reduce the overall nonlinearity of the tuneable resistance structure.

The main area of interest for application of the invention is for line termination in high-speed interfaces. However, the invention is not limited to application for termination resistors, but can also be used for any application where tuneability of resistance is required.

Although the tuneability is a significant benefit as provided by some of the topologies above, this tuning is not necessary in all applications.. The topology can also be advantageous to just linearize the output characteristics of a non- linear device, such as a MOS transistor.

In the examples above, the transistor source is connected to a termination voltage which acts as reference level (e.g. a supply). In that case, a scaled fraction of the ac drain voltage is super-positioned on to the gate-source voltage to improve linearity, as in that case the ac drain voltage is equivalent to ac drain-source voltage. Other circuit connections are possible in which the source is no longer at a fixed voltage, and indeed the source voltage relative to a fixed voltage can then become the feedback voltage to be coupled to the gate.

The invention is mainly of interest when using a transistor to emulate a resistor, but the invention can be applied to other devices which function as a controlled resistor, and which have a control terminal which influences the resistance between two other terminals.

Various other modifications will be apparent to those skilled in the art.

## Claims

1. An integrated circuit for emulating a resistor (72, 74), comprising:
a main circuit element being the main transistor having a control terminal being a gate and a source and a drain as respective input and output terminal, the resistance between the source and drain providing the emulated resistor;
a high-impedance direct current, DC, gate bias circuit for biasing the main transistor into operation in its linear region;
a coupling circuit for coupling a voltage dependent on the voltage between the input terminal and output terminal to the voltage applied to the control terminal, thereby to improve linearity of the current-voltage relationship between the source and drain with respect to changes in the voltage between the source and drain;
wherein either a) the coupling circuit comprises a feedforward capacitor, C, connected between the gate and drain of the main transistor, and coupling a voltage dependent on the voltage between the input terminal and output terminal to the voltage applied to the control terminal comprises adding a scaled fraction of the ac source-drain voltage to the gate voltage;
or b) the circuit comprises a series resistor, Rbias, in series with the drain of the main transistor, wherein the coupling circuit comprises a feed-forward capacitor and is for adding a scaled fraction of the ac source-drain voltage to the gate voltage, connected between a node of the series resistor remote from the drain and the gate of the main transistor or between the drain and the gate of the main transistor or a combination of both, and wherein the coupling circuit is for adding a voltage comprising a scaled fraction of one or more of:
the alternating current, AC, source voltage of the main transistor;
the AC drain voltage of the main transistor;
the AC source-drain of the main transistor;
the AC voltage across the series resistor.

2. A circuit as claimed in claim 1 a), wherein the gate bias circuit comprises:
a bias transistor which is a scaled version of the main transistor;
a current source for driving a known current through the bias transistor;
a feedback loop that controls the gate voltage of the bias transistor, wherein the gate voltage of the bias transistor is used as the output of the gate bias circuit, which is applied to the main transistor gate through a bias resistor.

3. A circuit as claimed in claim 1b), wherein the gate bias circuit comprises:
a bias transistor which is a scaled version of the main transistor;
a series bias resistor in series with the drain of the bias transistor and which is a scaled version of the series resistor;
a current source for driving a known current through the bias transistor;
a feedback loop that controls the gate voltage of the bias transistor, wherein the gate voltage of the bias transistor is used as the output of the gate bias circuit, which is applied to the main transistor gate through a bias resistor.

4. A circuit as claimed in claim 1b), wherein the feedback loop comprises a
amplifier that receives as inputs a common mode reference voltage input and the voltage at a node of the series bias resistor remote from the drain of the bias transistor, and generates as output the gate voltage of the bias transistor.

5. A circuit as claimed in claim 1b), wherein the main transistor comprises a
first main transistor, and there is a second main transistor, the two main transistors are associated with different series resistances, wherein a switching arrangement is provided to enable the first and second main transistors to be switched in or out of circuit, thereby providing control of the impedance of the circuit.

6. A circuit as claimed in claim 1, wherein the main transistor comprises a field-effect transistor, FET.

7. A switched current line driver circuit, comprising:
a first resistor emulator circuit as claimed in claim 1 between a supply voltage and a first output terminal of the line driver circuit; and
a second resistor emulator circuit as claimed in claim 1 between the supply voltage and a second output terminal of the line driver circuit.

8. A circuit as claimed in claim 7, further comprising:
a current source for sinking or sourcing current from or to the resistor emulator circuits;
a first control switch between the first resistor emulator circuit and the current source with a first output node between the first resistor emulator circuit and the first control switch; and
a second control switch between the second resistor emulator circuit and the current source, with a second output node between the second resistor emulator circuit and the second control switch,
wherein a signal to be transmitted by the line driver is applied to the control switches.

9. A method of emulating a resistor by means of an integrated circuit (72,74), the method comprising:
providing a high-impedance direct current, DC, gate bias to a main transistor to bias the transistor into operation in its linear region, the main transistor having a control terminal being a gate and a source and a drain as respective input and output terminal;
coupling a voltage dependent on the voltage between the input and output terminal to the gate voltage applied to the control terminal, thereby to improve linearity of the current-voltage relationship between the drain and source with respect to the drain-source voltage; and
using the drain-source resistance of the main transistor as the emulated resistor;
wherein either a) the coupling circuit comprises a feedforward capacitor, C, connected between the gate and drain of the main transistor, and coupling a voltage dependent on the voltage between the input terminal and output terminal to the voltage applied to the control terminal comprises adding a scaled fraction of the ac source-drain voltage to the gate voltage;
or b) the circuit comprises a series resistor, Rbias, in series with the drain of the main transistor, wherein the coupling circuit comprises a feed-forward capacitor and is for adding a scaled fraction of the ac source-drain voltage to the gate voltage, connected between a node of the series resistor remote from the drain and the gate of the main transistor or between the drain and the gate of the main transistor or a combination of both, and wherein the coupling circuit is for adding a voltage comprising a scaled fraction of one or more of:
the alternating current, AC, source voltage of the main transistor;
the AC drain voltage of the main transistor;
the AC source-drain of the main transistor;
the AC voltage across the series resistor.

## Patentansprüche

1. Ein integrierter Schaltkreis zum Emulieren eines Widerstandes (72, 74), aufweisend:
ein Hauptschaltkreis Element, welches der Haupttransistor ist, welcher hat einen Steueranschluss, welcher ein Gate ist, und eine Source und ein Drain als jeweiligen Eingangsanschluss und Ausgangsanschluss, wobei der Widerstand zwischen der Source und dem Drain den emulierten Widerstand bereitstellt;
ein hochohmiger Gleichstrom, DC, Gate Vorspannung Schaltkreis zum Vorspannen des Haupttransistors in Betrieb in seinem linearem Bereich;
einen Kopplungsschaltkreis zum Koppeln einer Spannung, welche von der Spannung zwischen dem Eingangsanschluss und dem Ausgangsanschluss abhängig ist, zu der Spannung ,welche an dem Steuerterminal anliegt, um somit eine Linearität von der Strom-Spannung Beziehung zwischen der Source und dem Drain zu verbessern in Bezug auf Änderungen in der Spannung zwischen der Source und dem Drain;
wobei entweder
a) der Kopplungsschaltkreis aufweisend einen Feedforward Kondensator, C, welcher zwischen dem Gate und dem Drain von dem Haupttransistor geschaltet ist, und Koppeln einer Spannung, welche von der Spannung zwischen dem Eingangsanschluss und dem Ausgangsanschluss abhängig ist, zu der Spannung, welche an dem Steueranschluss angelegt ist, ein Addieren eines skalierten Anteils von der ac Source-Drain Spannung zu der Gate Spannung aufweist;
oder
b) der Schaltkreis einen Reihenwiderstand, Rbias, in Reihe mit dem Drain von dem Haupttransistor aufweist, wobei der Kopplungsschaltkreis einen Feedforward Kondensator aufweist und ist zum Addieren eines skalierten Anteils von der ac Source-Drain Spannung zu der Gate Spannung, welcher verbunden ist zwischen einem Knoten von dem Reihenwiderstand entfernt von dem Drain und dem Gate von dem Haupttransistor oder zwischen dem Drain und dem Gate von dem Haupttransistor oder einer Kombination von beidem, und wobei der Kopplungsschaltkreis ist zum Addieren einer Spannung, welche einen skalierten Anteil aufweist von einem oder mehreren von:
der alternierenden Strom, AC, Sourcespannung von dem Haupttransistor;
der AC Drain Spannung von dem Haupttransistor;
der AC Source-Drain von dem Haupttransistor;
der AC Spannung über dem Reihenwiderstand.

2. Ein Schaltkreis gemäß Anspruch 1 a), wobei der Gate Vorspannung Schaltkreis aufweist:
einen Vorspannungstransistor, welcher eine skalierte Version von dem Haupttransistors ist;
eine Stromquelle zum Treiben eines bekannten Stromes durch den Vorspannungstransistor;
eine Feedback Schleife, welche die Gate Spannung von dem Vorspannungstransistor steuert, wobei die Gate Spannung von dem Vorspannungstransistor als der Ausgang von dem Gate Vorspannung Schaltkreis verwendet wird, welche an das Haupttransistor Gate durch einen Reihenwiderstand angelegt ist.

3. Ein Schaltkreis gemäß Anspruch 1 b), wobei der Gate Vorspannung Schaltkreis aufweist:
einen Vorspannungstransistor, welcher eine skalierte Version von dem Haupttransistors ist;
einen Reihen Vorspannungswiderstand, welcher in Reihe mit dem Drain von dem Vorspannungstransistor ist und welcher eine skalierte Version von dem Reihenwiderstand ist;
eine Stromquelle zum Treiben eines bekannten Stromes durch den Vorspannungstransistor;
eine Feedback Schleife, welche die Gate Spannung von dem Vorspannungstransistor steuert, wobei die Gate Spannung von dem Vorspannungstransistor als der Ausgang von dem Gate Vorspannung Schaltkreis verwendet wird, welche an das Haupttransistor Gate durch einen Vorspannungswiderstand angelegt ist.

4. Ein Schaltkreis gemäß Anspruch 1 b), wobei die Feedback Schleife aufweist einen Verstärker, welcher als Eingänge empfängt eine Gleichtakt Referenz Eingangsspannung und die Spannung an einem Knoten von dem Reihen Vorspannungswiderstand entfernt von dem Drain von dem Vorspannungstransistor, und als Ausgang die Gate Spannung von dem Vorspannungstransistor generiert.

5. Ein Schaltkreis gemäß Anspruch 1 b), wobei der Haupttransistor aufweist einen ersten Haupttransistor, und es gibt einen zweiten Haupttransistor, wobei die zwei Haupttransistoren mit verschiedenen Reihenwiderständen verknüpft sind, wobei eine Schaltanordnung bereitgestellt ist, um den ersten Haupttransistor und den zweiten Haupttransistor zu ermöglichen in oder aus dem Schaltkreis geschaltet zu werden, um somit eine Steuerung der Impedanz von dem Schaltkreis bereitzustellen.

6. Ein Schaltkreis gemäß Anspruch 1, wobei der Haupttransistor einen Feldeffekt Transistor, FET, aufweist.

7. Ein geschalteter Stromleitung Treiberschaltkreis, aufweisend:
einen ersten Widerstand Emulator Schaltkreis gemäß Anspruch 1 zwischen einer Versorgungsspannung und einem ersten Ausgangsanschluss von dem Leitung Treiberschaltkreis; und
einen zweiten Widerstand Emulator Schaltkreis gemäß Anspruch 1 zwischen der Versorgungsspannung und einem zweiten Ausgangsanschluss von dem Leitung Treiberschaltkreis.

8. Ein Schaltkreis gemäß Anspruch 7, welcher ferner aufweist:
eine Stromquelle zum Absenken oder Beziehen von Strom von oder zu den Wiederstand Emulator Schaltkreisen;
einen ersten Steuerschalter zwischen dem ersten Widerstand Emulator Schaltkreis und der Stromquelle mit einem ersten Ausgangsknoten zwischen dem ersten Widerstand Emulator Schaltkreis und dem ersten Steuerschalter; und
einen zweiten Steuerschalter zwischen dem zweiten Widerstand Emulator Schaltkreis und der Stromquelle, mit einem zweiten Ausgangsknoten zwischen dem zweiten Widerstand Emulator Schaltkreis und dem zweiten Steuerschalter,
wobei ein Signal, welches mittels des Leitung Treibers übertragen werden soll, an die Steuerschalter angelegt wird.

9. Ein Verfahren zum Emulieren eines Widerstandes mittels Mitteln von einem integrierten Schaltkreis (72, 74), wobei das Verfahren aufweist:
Bereitstellen einer hochohmigen Gleichstrom, DC, Gate Vorspannung zu einem Haupttransistor, um den Transistor in Betrieb in seinem linearem Bereich vorzuspannen, wobei der Haupttransistor hat einen Steueranschluss, welcher ein Gate ist und eine Source und ein Drain als jeweiligen Eingangsanschluss und Ausgangsanschluss;
Koppeln einer Spannung, welche abhängig ist von der Spannung zwischen dem Eingangsanschluss und dem Ausgangsanschluss zu der Gate Spannung, welche an den Steueranschluss angelegt wird, um somit eine Linearität von der Strom-Spannung Beziehung zwischen dem Drain und der Source zu verbessern in Bezug auf die Drain-Source Spannung; und
Verwenden des Drain-Source Widerstandes von dem Haupttransistor als den emulierten Widerstand;
wobei entweder
a) der Kopplungsschaltkreis einen Feedforward Kondensator, C, aufweist, welcher zwischen das Gate und dem Drain von dem Haupttransistor geschaltet ist, und Koppeln einer Spannung, welche abhängig ist von der Spannung zwischen dem Eingangsanschluss und dem Ausgangsanschluss zu der Spannung, welche auf den Steueranschluss angelegt wird ein Addieren eines skalierten Anteiles von der ac Source-Drain Spannung zu der Gate Spannung aufweist;
oder
b) der Schaltkreis einen Reihenwiderstand, Rbias, aufweist, welcher in Reihe ist mit dem Drain von dem Haupttransistor ist, wobei der Kopplungsschaltkreis einen Feedforward Kondensator aufweist und welcher ist zum Addieren eines skalierten Anteils von der ac Source-Drain Spannung zu der Gate Spannung, welcher verbunden ist zwischen einem Knoten von dem Reihenwiderstand entfernt von dem Drain und dem Gate von dem Haupttransistor oder zwischen dem Drain und dem Gate von dem Haupttransistor oder einer Kombination von beidem, und wobei der Kopplungsschaltkreis ist zum Addieren einer Spannung, welche einen skalierten Anteil aufweist von einem oder mehreren von:
der alternierenden Strom, AC, Sourcespannung von dem Haupttransistor;
der AC Drainspannung von dem Haupttransistor;
der AC Source-Drain von dem Haupttransistor;
der AC Spannung über dem Reihenwiderstand.

## Revendications

1. Circuit intégré pour l'émulation d'une résistance (72, 74), comprenant :
un élément de circuit principal étant le transistor principal avec une borne de commande qui est une grille et une source et un drain en tant que borne d'entrée et borne de sortie respectives, la résistance (valeur ohmique) entre la source et le drain procurant la résistance émulée ;
un circuit de polarisation de grille à courant continu, CC, à haute impédance pour polariser le transistor principal en un fonctionnement dans sa région linéaire ;
un circuit de couplage pour coupler une tension, dépendante de la tension entre la borne d'entrée et la borne de sortie, à la tension appliquée à la borne de commande, ce qui améliore par conséquent la linéarité de la relation courant-tension entre la source et le drain par rapport à des changements dans la tension entre la source et le drain ;
cas dans lequel soit a)
le circuit de couplage comprend un condensateur à action anticipée, C, connecté entre la grille et le drain du transistor principal, et le couplage d'une tension dépendante de la tension entre la borne d'entrée et la borne de sortie à la tension appliquée à la borne de commande comprend l'adjonction d'une fraction mise à l'échelle de la tension source-drain ca à la tension de grille ;
soit b)
le circuit comprend une résistance série, Rbias, montée en série avec le drain du transistor principal, le circuit de couplage comprenant un condensateur à action anticipée et étant destiné à ajouter une fraction mise à l'échelle de la tension source-drain ca à la tension de grille, connecté entre un noeud de la résistance série éloigné du drain et la grille du transistor principal ou entre le drain et la grille du transistor principal ou une combinaison des deux, et le circuit de couplage étant destiné à ajouter une tension comprenant une fraction mise à l'échelle d'un ou de plusieurs éléments suivants :
la tension source à courant alternatif, CA, du transistor principal ;
la tension de drain CA du transistor principal ;
la source-drain CA du transistor principal ;
la tension CA aux bornes de la résistance série.

2. Circuit selon la revendication 1 a), le circuit de polarisation de grille comprenant :
un transistor de polarisation qui est une version mise à l'échelle du transistor principal ;
une source de courant pour injecter un courant connu à travers le transistor de polarisation ;
une boucle de rétroaction qui pilote la tension de grille du transistor de polarisation, la tension de grille du transistor de polarisation étant utilisée en tant que sortie du circuit de polarisation de grille, laquelle est appliquée à la grille du transistor principal par l'intermédiaire d'une résistance de polarisation.

3. Circuit selon la revendication 1 b), le circuit de polarisation de grille comprenant :
un transistor de polarisation qui est une version mise à l'échelle du transistor principal ;
une résistance de polarisation série montée en série avec le drain du transistor de polarisation et qui est une version mise à l'échelle de la résistance série ;
une source de courant pour injecter un courant connu à travers le transistor de polarisation ;
une boucle de rétroaction qui pilote la tension de grille du transistor de polarisation, la tension de grille du transistor de polarisation étant utilisée en tant que sortie du circuit de polarisation de grille, laquelle est appliquée à la grille du transistor principal par l'intermédiaire d'une résistance de polarisation.

4. Circuit selon la revendication 1 b), la boucle de rétroaction comprenant un amplificateur qui reçoit en tant qu'entrées une entrée de tension de référence en mode commun et la tension au niveau d'un noeud de la résistance de polarisation série éloigné du drain du transistor de polarisation, et génère en tant que sortie la tension de grille du transistor de polarisation.

5. Circuit selon la revendication 1 b), le transistor principal comprenant un premier transistor principal, et où il existe un deuxième transistor principal, les deux transistors principaux étant associés à des résistances série différentes, un agencement de commutation étant prévu pour permettre aux premier et deuxième transistors principaux d'être commutés pour être en circuit ou hors circuit, ce qui procure par conséquent un pilotage de l'impédance du circuit.

6. Circuit selon la revendication 1, le transistor principal comprenant un transistor à effet de champ, FET.

7. Circuit d'attaqueur de ligne à courant commuté, comprenant :
un premier circuit émulateur de résistance selon la revendication 1 entre une tension d'alimentation et une première borne de sortie du circuit d'attaqueur de ligne ; et
un deuxième circuit émulateur de résistance selon la revendication 1 entre la tension d'alimentation et une deuxième borne de sortie du circuit d'attaqueur de ligne.

8. Circuit selon la revendication 7, comprenant en outre :
une source de courant pour absorber ou débiter un courant provenant des circuits émulateurs de résistance ou se rendant vers ceux-ci ;
un premier commutateur de commande entre le premier circuit émulateur de résistance et la source de courant avec un premier noeud de sortie entre le premier circuit émulateur de résistance et le premier commutateur de commande ; et
un deuxième commutateur de commande entre le deuxième circuit émulateur de résistance et la source de courant, avec un deuxième noeud de sortie entre le deuxième circuit émulateur de résistance et le deuxième commutateur de commande,
un signal destiné à être transmis par l'attaqueur de ligne étant appliqué aux commutateurs de commande.

9. Procédé d'émulation d'une résistance au moyen d'un circuit intégré (72, 74), le procédé comprenant les opérations consistant à :
fournir une polarisation de grille à courant continu, CC, à haute impédance à un transistor principal pour polariser le transistor en un fonctionnement dans sa région linéaire, le transistor principal possédant une borne de commande qui est une grille et une source et un drain en tant que borne d'entrée et borne de sortie respectives ;
coupler une tension, dépendante de la tension entre la borne d'entrée et de sortie, à la tension de grille appliquée à la borne de commande, ce qui améliore par conséquent la linéarité de la relation courant-tension entre le drain et la source par rapport à la tension drain-source ; et
utiliser la résistance (valeur ohmique) drain-source du transistor principal en tant que résistance émulée ;
cas dans lequel soit a)
le circuit de couplage comprend un condensateur à action anticipée, C, connecté entre la grille et le drain du transistor principal, et le couplage d'une tension dépendante de la tension entre la borne d'entrée et la borne de sortie à la tension appliquée à la borne de commande comprend l'adjonction d'une fraction mise à l'échelle de la tension source-drain ca à la tension de grille ;
soit b)
le circuit comprend une résistance série, Rbias, montée en série avec le drain du transistor principal, le circuit de couplage comprenant un condensateur à action anticipée et étant destiné à ajouter une fraction mise à l'échelle de la tension source-drain ca à la tension de grille, connecté entre un noeud de la résistance série éloigné du drain et la grille du transistor principal ou entre le drain et la grille du transistor principal ou une combinaison des deux, et le circuit de couplage étant destiné à ajouter une tension comprenant une fraction mise à l'échelle d'un ou de plusieurs éléments suivants :
la tension source à courant alternatif, CA, du transistor principal ;
la tension de drain CA du transistor principal ;
la source-drain CA du transistor principal ;
la tension CA aux bornes de la résistance série.
